# EUROPEAN PATENT APPLICATION

(11) **EP 3 057 113 A1**
(43) Date of publication of application: **17.08.2016**
(21) Application number: 13893857.6
(22) Date of filing: 17.09.2013
(51) Int. Cl.: H01F 38/14, H01F 27/28, H02J 5/00

(54) **CONTACTLESS POWER TRANSMISSION DEVICE**

(71) Applicant: Panasonic Intellectual Property Management Co., Ltd., Osaka-shi, Osaka 540-6207 (JP)
(72) Inventor: FUJITA, Atsushi, Osaka-shi, Osaka 540-6207 (JP); SADAKATA, Hideki, Osaka-shi, Osaka 540-6207 (JP); OMORI, Yoshiharu, Osaka-shi, Osaka 540-6207 (JP); MIYASHITA, Norihiro, Osaka-shi, Osaka 540-6207 (JP); BESSYO, Daisuke, Osaka-shi, Osaka 540-6207 (JP)
(74) Representative: Schwabe - Sandmair - Marx
(86) International application number: PCT/JP2013/005494
(87) International publication number: WO 2015/040650

(57) **Abstract**

The purpose of the present invention is to provide a contactless charging device which reduces magnetic field leaking from an air gap between a primary coil and a secondary coil so as to suppress radiation noise in contactless electrical power transmission. The device is provided with a power supply device (1) comprising a primary coil (13) which generates a magnetic field by way of a supply current from a power supply (2), and a power receiving device (8) comprising a secondary coil (15) which receives power by way of the magnetic field from the primary coil (13). The primary coil (13) and the secondary coil (15) are formed by winding coil wires, and the number of turns of the secondary coil (15) is set to be greater than the number of turns of the primary coil (13).

## Description

### Technical Field

The present invention relates to a contactless power transmission apparatus used for charging or the like of an electric propulsion vehicle such as an electric automobile or plug-in hybrid automobile.

### Background Art

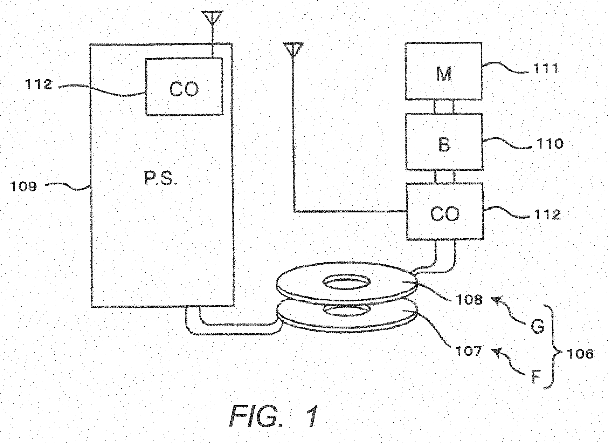

FIG. 1 is a schematic diagram illustrating a configuration of contactless power transmission apparatus 106 according to the related art. In FIG. 1, a power feeding apparatus (primary side) F connected to a power panel of power supply 109 on a ground side is disposed so as to face a power receiving apparatus (secondary side) G with an air gap interposed in between and without any physical contact during power supply. This air gap is a void space. Power receiving apparatus G is mounted an electric propulsion vehicle. In such a configuration, when an alternating current (AC) is given to primary coil 107 (power feeding coil) provided for power feeding apparatus F and a magnetic field is generated, an induced electromotive force is generated in secondary coil 108 (power receiving coil) provided for power receiving apparatus G, and power is thereby transmitted contactlessly from primary coil 107 to secondary coil 108.

Power receiving apparatus G is connected to, for example, vehicle-mounted battery 110, and vehicle-mounted battery 110 is charged with the power transmitted as described above. Vehicle-mounted motor 111 is driven by the power stored in battery 110. Note that necessary information is exchanged between power feeding apparatus F and power receiving apparatus G during contactless power supply processing via, for example, wireless communication apparatus112.

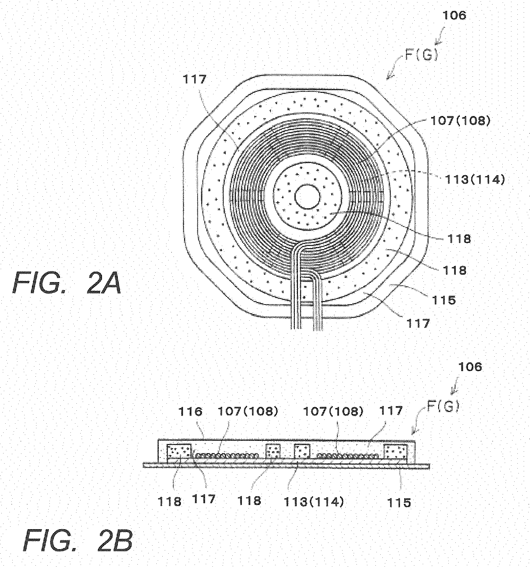

FIGS. 2A and 2B are schematic diagrams illustrating an inner structure of power feeding apparatus F and power receiving apparatus G. Particularly, FIG. 2A is a schematic diagram illustrating an inner structure of power feeding apparatus F seen from above and power receiving apparatus G seen from below. FIG. 2B is a schematic diagram illustrating an inner structure of power feeding apparatus F and power receiving apparatus G seen laterally.

In FIGS. 2A and 2B, power feeding apparatus F includes primary coil 107, primary magnetic core 113, back plate 115 and cover 116 or the like. Briefly, power receiving apparatus G has a structure symmetric with respect to power feeding apparatus F and includes secondary coil 108, secondary magnetic core 114, back plate 115, and cover 116, for example. In power receiving apparatus G, surfaces of primary coil 107 and primary magnetic core 113 and surfaces of secondary coil 108 and secondary magnetic core 114 are respectively covered fixedly with mold resin 117 into which foamed material 118 is mixed.

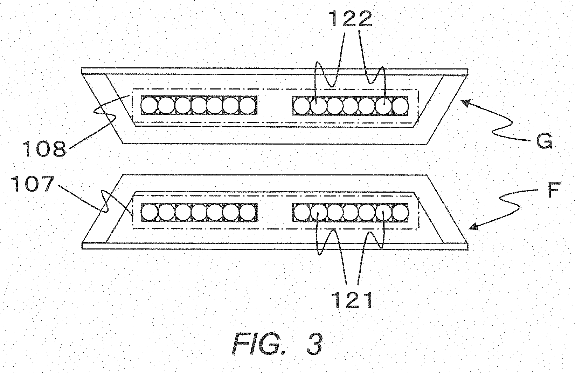

Here, a relationship between primary coil 107 of power feeding apparatus F and secondary coil 108 of power receiving apparatus G in the related art will be described using a schematic diagram in FIG. 3. As shown in FIG. 3, primary coil 107 and secondary coil 108 are formed by spirally winding litz wires 121 and 122 which are a bundle of a plurality of elemental wires. When a vehicle is parked in a predetermined parking space, primary coil 107 of power feeding apparatus F on the ground side is disposed so as to face secondary coil 108 of power receiving apparatus G mounted on the vehicle. With primary coil 107 and secondary coil 108 facing each other, and a magnetic field generated from primary coil 107 interlinking with secondary coil 108 over a wide range, power is transmitted contactlessly.

### Citation List

### Patent Literature

PTL 1
Japanese Patent Application Laid-Open No. 2008-87733

### Summary of Invention

### Technical Problem

However, as shown in FIG. 3, there is an air gap between primary coil 107 and secondary coil 108. Thus, a magnetic field generated from primary coil 107, and a magnetic field generated from secondary coil 108 because of the an induced electromotive force generated by the magnetic field of primary coil 107 partially leak into the space. The Radio Act or the like sets a limit for an electric field strength (radiation noise) measured by an antenna installed several tens of meters ahead, but there is a problem that the leaking magnetic field causes the radiation noise to increase.

In order to reduce the leaking magnetic field, the air gap between primary coil 107 and secondary coil 108 may be reduced, but in the case of an electric propulsion vehicle, the height of the vehicle fluctuates due to getting on/off of passengers, loading and unloading of luggage or the like. When a small air gap is set to reduce radiation noise, power feeding apparatus F may come into contact with power receiving apparatus G due to such a fluctuation of the vehicle height and may cause damage in extreme cases.

An object of the present invention is to solve the above-described problems and thus to provide a contactless charging apparatus capable of reducing a magnetic field leaking from a gap between a primary coil and a secondary coil, and of suppressing radiation noise.

### Solution to Problem

In order to achieve the above described object, the present invention employs the following configuration.

A contactless power transmission apparatus according to an aspect of the present invention includes: a power feeding apparatus including a primary coil that generates a magnetic field through a supply current from a power supply; and a power receiving apparatus including a secondary coil that receives power through a magnetic field from the primary coil, in which the primary coil and the secondary coil are each formed by winding a coil wire, and the number of turns of the secondary coil is set to be greater than the number of turns of the primary coil.

### Advantageous Effects of Invention

The magnetic field generated from the coil has a correlation with the product of a current flowing through the coil and the number of turns of the coil, and the greater the product, the greater the amount of magnetic field becomes. On the other hand, since the magnetic field of the primary coil and the magnetic field of the secondary coil are out of phase, both magnetic fields have functions to cancel out each other, so that setting the magnetic field of the secondary coil to be greater than the magnetic field of the primary coil makes it possible to enhance the functions to cancel out each other.

The present invention employs the configuration of setting the number of turns of the secondary coil to be greater than the number of turns of the primary coil, and can thereby set the ratio of the magnetic field from the secondary coil to be greater than the magnetic field from the primary coil. Therefore, the effect of cancelling out each other the magnetic field of the primary coil and the magnetic field of the secondary coil can be enhanced, thus making it possible to reduce the leaking magnetic field and suppress the occurrence of radiation noise in contactless power transmission.

### Brief Description of Drawings

FIG. 1 is a schematic diagram illustrating a configuration of a contactless power transmission apparatus according to the prior art;
FIGS. 2A and 2B are diagrams illustrating an inner structure of a power receiving apparatus (power feeding apparatus) disposed opposite to a power feeding apparatus (power receiving apparatus) in FIG. 1;
FIG. 3 is a cross-sectional view of the power feeding apparatus and the power receiving apparatus in FIGS. 2A and 2B;
FIG. 4 is a block diagram of a contactless power transmission apparatus according to an embodiment of the present invention;
FIG. 5 is an outline view of the contactless power transmission apparatus in FIG. 4;
FIG. 6 is an outline view of the contactless power transmission apparatus in FIG. 4;
FIG. 7 is a cross-sectional view of a ground-side coil unit and a vehicle-side coil unit;
FIGS. 8A and 8B are cross-sectional views of a litz wire;
FIG. 9 is a graph illustrating a relationship between a magnetic field of the vehicle-side coil and a current of the vehicle-side coil, and the number of turns of the vehicle-side coil;
FIG. 10 is a graph illustrating a relationship between a magnetic field of the vehicle-side coil and a magnetic field of the ground-side coil, and the number of turns of the vehicle-side coil;
FIGS. 11A and 11B are schematic diagrams illustrating magnetic field distributions in the periphery of the ground-side coil unit and the vehicle-side coil unit;
FIG. 12 is a cross-sectional view of the ground-side coil unit and the vehicle-side coil unit (Variation 1)
FIG. 13 is a cross-sectional view of the ground-side coil unit and the vehicle-side coil unit (Variation 2); and
FIG. 14 is a cross-sectional view of the litz wire (Variation 3).

### Description of Embodiment

A contactless charging apparatus according to an aspect of the present invention adopts a configuration including a power feeding apparatus including a primary coil that generates a magnetic field through a supply current from a power supply and a power receiving apparatus including a secondary coil that receives power through a magnetic field from the primary coil, in which the primary coil and the secondary coil are formed by winding coil wires and the number of turns of the secondary coil is set to be greater than the number of turns of the primary coil.

With such a configuration, it is possible to increase a ratio of the magnetic field from the secondary coil to the magnetic field from the primary coil. Therefore, it is possible to enhance the effect of the magnetic field of the primary coil and the magnetic field of the secondary coil canceling out each other, reduce the leaking magnetic field and suppress the occurrence of radiation noise in contactless power transmission.

### (Embodiment)

Hereinafter, an embodiment of the present invention will be described with reference to the accompanying drawings. Note that the present embodiment is not intended to limit the present invention.

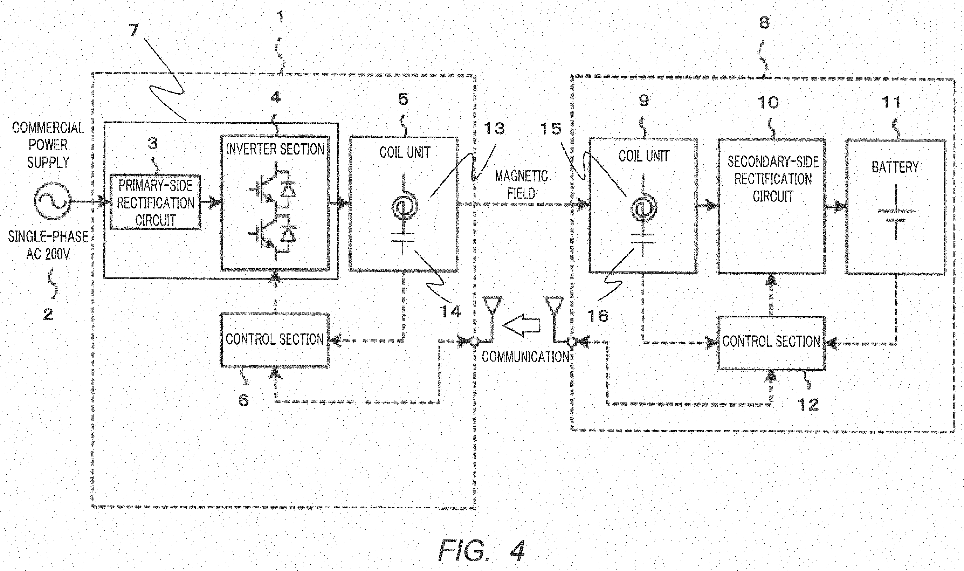

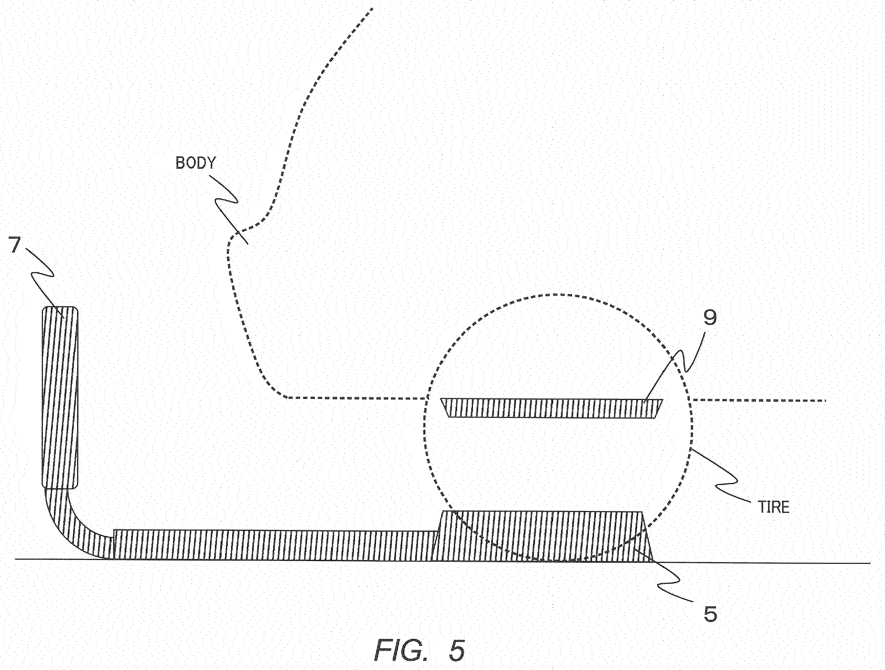

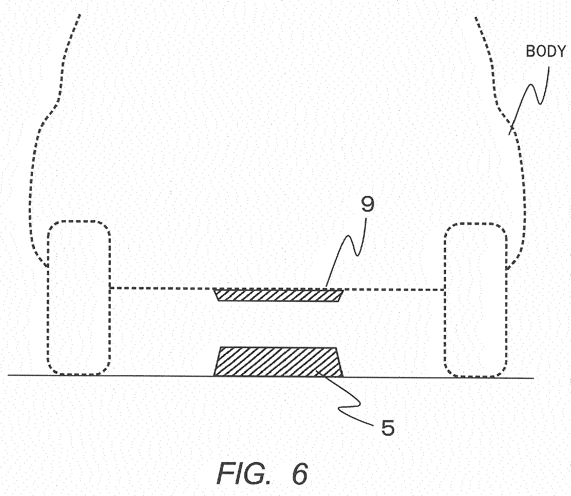

FIG. 4 is a block diagram of a contactless power transmission apparatus according to the present invention. FIG. 5 and FIG. 6 are outline views of a vehicle placed in a parking space. As shown in FIG. 4, FIG. 5 and FIG. 6, the contactless power transmission apparatus is composed of power feeding apparatus 1 placed, for example, in a parking space and power receiving apparatus 8 mounted on, for example, an electric propulsion vehicle.

Power feeding apparatus 1 includes primary-side rectification circuit 3 connected to commercial power supply 2, inverter section 4, ground-side coil unit 5, control section (power-feeding-apparatus side control section, for example, microcomputer) 6, with primary-side rectification circuit 3 and inverter section 4 constituting power control apparatus 7 which is a high-frequency power supply. Power receiving apparatus 8 includes vehicle-side coil unit 9, secondary-side rectification circuit 10 which is a rectification section that rectifies power, battery 11 which is a load, and control section (power-receiving-apparatus side control section, for example, microcomputer) 12.

In power feeding apparatus 1, commercial power supply 2 is a 200 V commercial power supply which is a low-frequency AC power supply and connected to an input end of primary-side rectification circuit 3, an output end of primary-side rectification circuit 3 is connected to an input end of inverter section 4 and an output end of inverter section 4 is connected to ground-side coil unit 5. Meanwhile, in power receiving apparatus 8, an output end of vehicle-side coil unit 9 is connected to an input end of secondary-side rectification circuit 10 and an output end of secondary-side rectification circuit 10 is connected to battery 11.

Ground-side coil unit 5 is installed on the ground and power control apparatus 7 is installed in an upright position at a predetermined distance from, for example, ground-side coil unit 5 (see FIG. 5). Meanwhile, vehicle-side coil unit 9 is attached to a body bottom section (e.g., chassis).

Ground-side coil 13 which is a primary coil and ground-side resonance capacitor 14 are installed inside ground-side coil unit 5 which is placed on the ground. Ground-side coil 13 and ground-side resonance capacitor 14 are connected in series and their other terminals are connected to the output end of inverter section 4.

Similarly, vehicle-side coil 15 which is a secondary coil and vehicle-side resonance capacitor 16 are installed inside vehicle-side coil unit 9 attached to the body bottom section. Vehicle-side coil 15 and vehicle-side resonance capacitor 16 are connected in series and their other terminals are connected to the input end of secondary-side rectification circuit 10.

A resonance frequency between ground-side coil 13 and ground-side resonance capacitor 14 is set to be substantially identical to a resonance frequency between vehicle-side coil 15 and vehicle-side resonance capacitor 16.

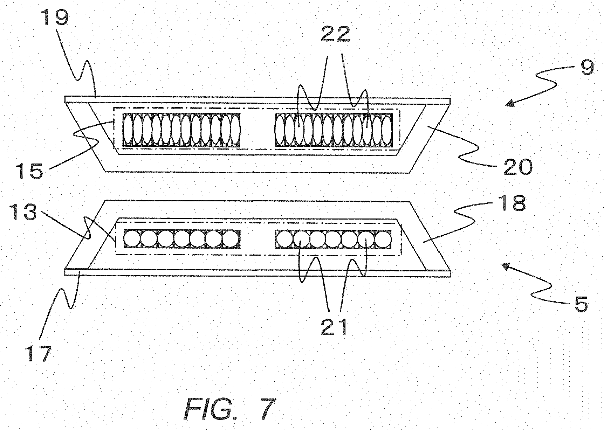

FIG. 7 is a cross-sectional view of parts of ground-side coil 13 and vehicle-side coil 15 in particular in ground-side coil unit 5 and vehicle-side coil unit 9 of the contactless charging apparatus of the present embodiment. As shown in FIG. 7, ground-side coil unit 5 includes base 17 fixed on the ground side, ground-side coil 13 installed on base 17, and cover 18 which is a case that covers ground-side coil 13. Vehicle-side coil unit 9 includes base 19 fixed to the vehicle body, vehicle-side coil 15 installed on base 19, and cover 20 which is a case that covers vehicle-side coil 15.

Ground-side coil 13 is formed by spirally winding coil wire 21 to form a plurality of turns, and similarly, vehicle-side coil 15 is formed by spirally winding coil wire 22 to form a plurality of turns. Ground-side coil 13 and vehicle-side coil 15 each have a circular-plate shape and are designed to have substantially the same outer and inner diameters. Litz wires are used as coil wires 21 and 22 of ground-side coil 13 and vehicle-side coil 15, but other conductive wires may also be used.

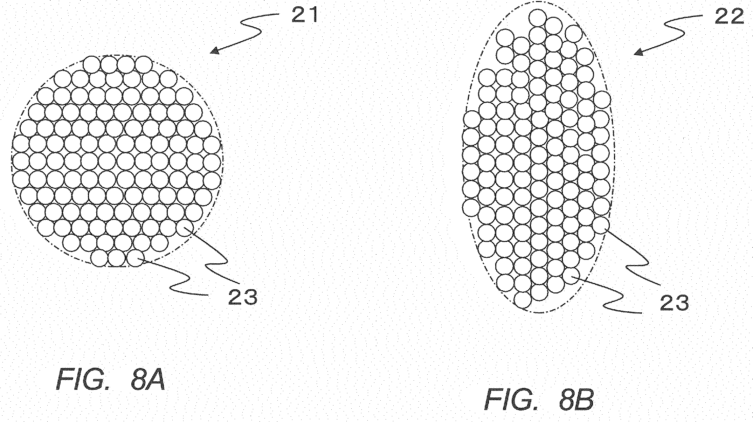

Here, cross-sectional views of litz wires 21 and 22 that form the respective coils are shown in FIG. 8A and FIG. 8B. As shown in FIG. 8A and FIG. 8B, litz wires 21 and 22 are each formed by bundling a plurality of elemental wires 23. Litz wire 21 (see FIG. 8A) making up ground-side coil 13 has a substantially circular cross section. Meanwhile, litz wire 22 (see FIG. 8B) making up vehicle-side coil 15 has a flat ellipsoidal cross section. Vehicle-side coil 15 is configured by winding litz wire 22 so that the short width of litz wire 22 is positioned in a diameter direction of vehicle-side coil 15 and the long width of litz wire 22 is positioned in a direction orthogonal to the diameter direction.

Ground-side coil 13 and vehicle-side coil 15 are formed by winding litz wires 21 and 22 having such cross-sectional shapes so that ground-side coil 13 and vehicle-side coil 15 have substantially the same inner and outer diameters. As shown in FIG. 8A and FIG. 8B, since litz wires 21 and 22 have different cross-sectional shapes, vehicle-side coil 15 has a greater number of turns than ground-side coil 13.

Since ground-side coil 13 and vehicle-side coil 15 are formed by winding wires so that vehicle-side coil 15 has a greater number of turns, vehicle-side coil 15 has a greater inductance. That is, the inductance of vehicle-side coil 15 is greater than the inductance of ground-side coil 13 and the capacitance of vehicle-side resonance capacitor 16 is set to be smaller than the capacitance of ground-side resonance capacitor 14. The respective products (the product of the inductance of ground-side coil 13 and the capacitance of ground-side resonance capacitor 14, and the product of the inductance of vehicle-side coil 15 and the capacitance of vehicle-side resonance capacitor 16) are set to be substantially identical. More specifically, the number of turns of ground-side coil 13 is 30 and the number of turns of vehicle-side coil 15 is 40 (described in a simplified manner in FIG. 7) in this embodiment.

In the above-described configuration, power-feeding-apparatus side control section 6 wirelessly communicates with power-receiving-apparatus side control section 12, power-receiving-apparatus side control section 12 determines a power command value according to a detected residual voltage of battery 11, and sends the determined power command value to power-feeding-apparatus side control section 6. At the same time, power-receiving-apparatus side control section 12 transmits the voltage and current of battery 11 and receiving power calculated therefrom to power-feeding-apparatus side control section 6. Power-feeding-apparatus side control section 6 compares the received power command value with the actual receiving power and drives inverter section 4 so as to obtain receiving power corresponding to the power command value within a range not exceeding rated input power of power feeding apparatus 1.

More specifically, power-feeding-apparatus side control section 6 starts driving inverter section 4 at a high frequency, by a predetermined width, apart from a resonance frequency between ground-side coil 13 and ground-side resonance capacitor 14 and a resonance frequency between vehicle-side coil 15 and vehicle-side resonance capacitor 16. The reason that driving is started at a high frequency apart from the resonance frequencies is that being apart from the resonance frequencies make the impedance seen from inverter section 4 higher and make it possible to suppress the output power to a low level and avoid a transient overloaded operation state (overvoltage and overcurrent) immediately after the driving starts.

After that, power-feeding-apparatus side control section 6 causes the drive frequency of inverter section 4 to gradually decrease to approach the resonance frequencies. The impedance seen from inverter section 4 decreases and the receiving power gradually increases.

During a power supply, power-receiving-apparatus side control section 12 detects receiving power and changes a power command value for power-feeding-apparatus side control section 6 so that no overcurrent or overvoltage is applied to battery 11.

As shown in FIG. 5 and FIG. 6, when power is supplied from power feeding apparatus 1 to power receiving apparatus 8, vehicle-side coil unit 9 is located opposite to ground-side coil unit 5 by moving the body (vehicle) as appropriate. Power-feeding-apparatus side control section 6 controls driving of inverter section 4 to thereby cause ground-side coil 13 to generate a high-frequency magnetic field. In vehicle-side coil 15, an induced electromotive force is generated by the magnetic field of ground-side coil 13 disposed opposite thereto and a high-frequency current is induced in vehicle-side coil 15. Power receiving apparatus 8 extracts power using this high-frequency current and charges battery 11 with the extracted power.

At this time, if battery 11 is, for example, 300V, an output of 10A is necessary to supply 3kW. Since the supply source of this output current is the high-frequency current induced from vehicle-side coil 15, there is a certain correlation between the output current and the current flowing through vehicle-side coil 15. That is, when power-receiving-apparatus side control section 12 determines a power command value, an approximate current value that should flow through vehicle-side coil 15 is also determined.

At this time, the high-frequency current induced into vehicle-side coil 15 is induced to generate a magnetic field that acts to cancel out the magnetic field from ground-side coil 13 based on the principle of electromagnetic induction.

The magnitude of a magnetic field generated from a coil generally has a correlation with the product (ampere turn) of the number of turns of the coil and a current that flows and it is known that the greater the number of turns of a coil and the higher the current that flows, the greater is the magnetic field generated from the coil.

Therefore, the current that flows through vehicle-side coil 15 is determined by a power command value of power-receiving-apparatus side control section 12 and a voltage of battery 11, and therefore the greater the number of turns of vehicle-side coil 15, the greater the magnetic field that acts to cancel out the magnetic field from ground-side coil 13 becomes. That is, it is possible to increase the ratio of the magnetic field of vehicle-side coil 15 acting to cancel out the magnetic field from ground-side coil 13, reduce the leaking magnetic field and thereby suppress the occurrence of radiation noise.

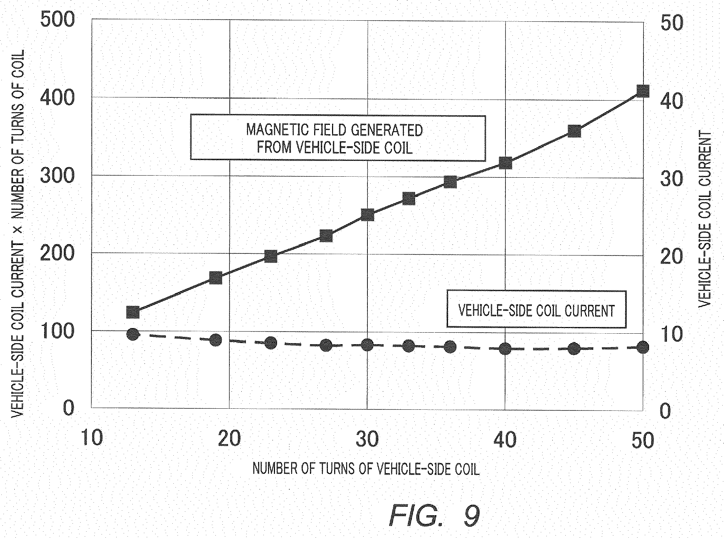

FIG. 9 illustrates changes of the magnetic field generated from vehicle-side coil 15 (the product of the current of vehicle-side coil 15 and the number of turns of vehicle-side coil 15) and the current of vehicle-side coil 15 in the case where the number of turns of vehicle-side coil 15 is changed while assuming the receiving power and the number of turns of ground-side coil 13 are constant. In FIG. 9, the horizontal axis represents the number of turns of vehicle-side coil 15, the solid line on the vertical axis represents a magnetic field generated from vehicle-side coil 15 and the broken line on the vertical axis represents a current of vehicle-side coil 15. The resonance frequency (combination of a coil and a resonance capacitor) is adjusted so that the product of the inductance of vehicle-side coil 15 and the capacitance of vehicle-side resonance capacitor 16 becomes identical to that on the ground side in order to make conditions consistent.

As is apparent from this drawing, there is substantially no change in the current of vehicle-side coil 15 with respect to the number of turns of vehicle-side coil 15, but the greater the number of turns of vehicle-side coil 15, the greater the magnetic field from vehicle-side coil 15 becomes.

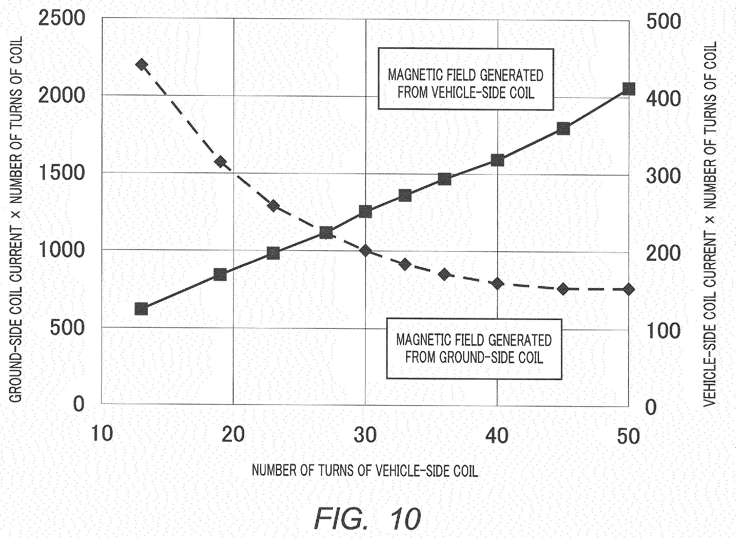

Meanwhile, FIG. 10 shows changes of the magnetic field generated from vehicle-side coil 15 (the product of the current of vehicle-side coil 15 and the number of turns of vehicle-side coil 15) and the magnetic field generated from ground-side coil 13 (the product of the current of ground-side coil 13 and the number of turns of vehicle-side coil 13) in the case where the number of turns of vehicle-side coil 15 is changed while assuming the receiving power and the number of turns of ground-side coil 13 to be constant. Note that the number of turns of ground-side coil 13 is set to 30.

In FIG. 10, the horizontal axis represents the number of turns of vehicle-side coil 15, the solid line on the vertical axis represents the magnetic field generated from vehicle-side coil 15, and the broken line on the vertical axis represents the magnetic field generated from ground-side coil 13. As described in FIG. 9, the resonance frequency (combination of a coil and a resonance capacitor) is adjusted so that the product of the inductance of vehicle-side coil 15 and the capacitance of vehicle-side resonance capacitor 16 becomes identical to that on the ground side to make conditions consistent.

As is apparent from FIG. 10, the magnetic field from ground-side coil 13 decreases as the number of turns of vehicle-side coil 15 increases. This is a phenomenon that occurs because the impedance of the entire load seen from ground-side coil 13 increases due to an increase in the number of turns of vehicle-side coil 15. In a region where the number of turns of vehicle-side coil 15 exceeds approximately 1.2 times the number of turns of ground-side coil 13, the magnetic field from ground-side coil 13 is substantially saturated and changes very little.

Meanwhile, also as described in FIG. 9, the greater the number of turns of vehicle-side coil 15, the greater the magnetic field from vehicle-side coil 15 becomes. That is, particularly in the region where the number of turns of vehicle-side coil 15 exceeds 1.2 times the number of turns of ground-side coil 13, the effect of reducing the leaking magnetic field increases and it becomes possible to suppress radiation noise.

The present embodiment sets the number of turns of ground-side coil 13 to 30 and the number of turns of vehicle-side coil 15 to 40, which is approximately 1.3 times, and can obtain a sufficient effect of radiation noise suppression. Meanwhile, if the number of turns of vehicle-side coil 15 is increased excessively, the inductance increases even when the current remains unchanged. This causes a voltage between terminals of vehicle-side coil 15 to increase, making it difficult to insulate litz wire 22 between turns or secure an insulating distance from peripheral members. Therefore, an appropriate number of turns of vehicle-side coil 15 may be selected from electrical requirements (insulation or the like) determined from vehicle-side coil 15 and requirements determined from radiation noise.

A receiving power characteristic with respect to a frequency, which is normally a single-peak characteristic having one peak, may become a two-peak characteristic having two peaks depending on a drive frequency of inverter section 4, a magnetic coupling state determined by shapes of and a positional relationship between ground-side coil 13 and vehicle-side coil 15, and a voltage of battery 11 or the like.

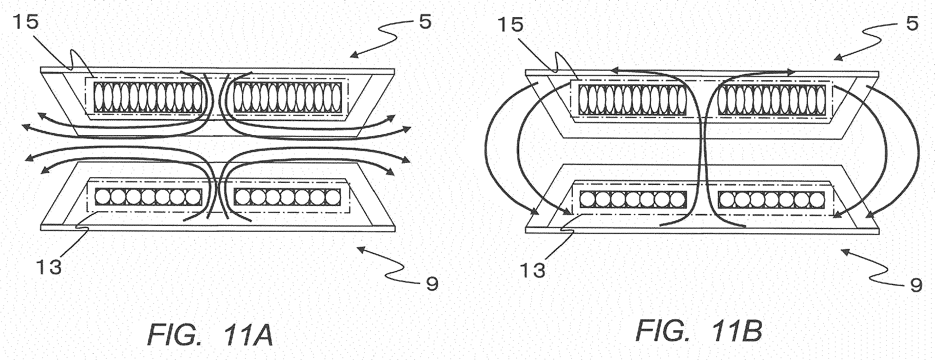

FIGS. 11A and 11B are schematic diagrams of peripheral magnetic field distributions of ground-side coil 13 and vehicle-side coil 15 when the frequency characteristic of receiving power becomes a two-peak characteristic. Regarding two frequencies at which the receiving power exhibits two peaks, at the higher frequency as shown in FIG. 11A, the magnetic field of vehicle-side coil 15 is generated with such a phase that the magnetic fields of ground-side coil 13 and vehicle-side coil 15 strengthen each other in the horizontal direction. That is, the current flowing through vehicle-side coil 15 flows with such a phase that the magnetic fields of ground-side coil 13 and vehicle-side coil 15 strengthen each other in the horizontal direction.

Meanwhile, at the lower frequency as shown in FIG. 11B, the magnetic field from ground-side coil 13 is distributed so as to penetrate opposite vehicle-side coil 15 and the magnetic field of vehicle-side coil 15 is generated with such a phase that the magnetic fields of ground-side coil 13 and vehicle-side coil 15 cancel out each other in the horizontal direction. That is, the current flowing through vehicle-side coil 15 flows with such a phase that the magnetic fields of ground-side coil 13 and vehicle-side coil 15 cancel out each other in the horizontal direction.

Operating inverter section 4 at a frequency on the low-frequency side is effective in suppressing radiation noise.

In the present embodiment, litz wire 22 making up vehicle-side coil 15 is formed to have a flat ellipsoidal cross section. This makes it possible to increase the number of turns with the same coil outer diameter shape, secure the cross-sectional area of litz wire 22 and suppress an increase in resistance. The current flowing through vehicle-side coil 15 is substantially determined by the voltage of battery 11 and required charging power. Thus, when the number of turns of vehicle-side coil 15 is increased, litz wire 22 becomes longer, which causes increases in loss and the amount of heat generation. However, the present embodiment is configured so that the cross-sectional area of litz wire 22 can be secured. Thus, it is possible to suppress increases in the amount of heat generation in vehicle-side coil 15.

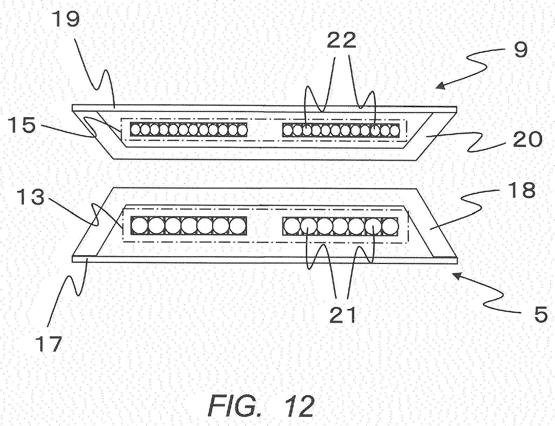

Furthermore, for example, when it is necessary to reduce the weight of vehicle-side coil unit 9, as shown in FIG. 12, the number of elemental wires 23 of litz wire 22 of vehicle-side coil 15 may be reduced so as to reduce the cross-sectional area of litz wire 22 and increase the number of turns of vehicle-side coil 15. In this case, as the cross-sectional area of litz wire 22 decreases, the resistance increases and the amount of heat generation in vehicle-side coil 15 thereby increases, but it is possible to suppress an increase in the weight of vehicle-side coil 15.

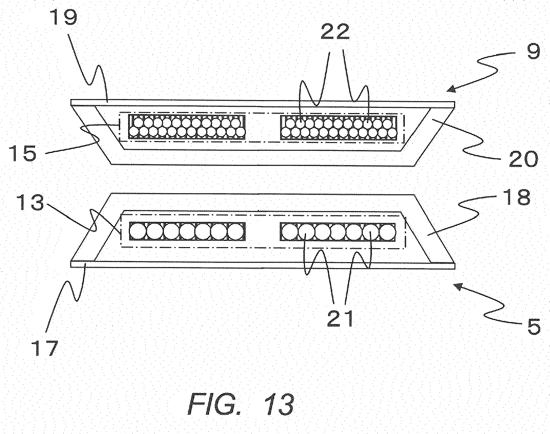

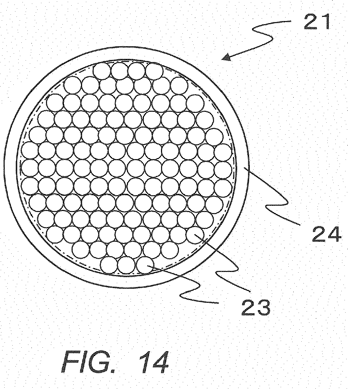

In the present embodiment, a description has been given of the configuration example in which litz wire 22 making up vehicle-side coil 15 is wound into a circular-plate shape in a single layer, but the present invention is not limited to this configuration example. For example, when vehicle-side coil unit 9 is downsized, litz wire 22 of vehicle-side coil 15 may be wound in a plurality of stages to increase the number of turns of vehicle-side coil 15 as shown in FIG. 13. Employing this configuration makes it possible to increase the number of turns while suppressing an increase in the size of the outer diameter of vehicle-side coil 15. In this configuration, since a voltage between adjacent turns of vehicle-side coil 15 is higher than that of single-layer winding, it is preferable to further provide insulating layer 24 such as Teflon (registered trademark) in an outer layer of litz wire 22 (shown in FIG. 14) or provide an insulating wall of resin or the like between adjacent turns of vehicle-side coil 15 to improve insulating properties.

In the present embodiment, vehicle-side coil 15 and ground-side coil 13 are formed to have substantially the same outer and inner diameters, but the coils may be formed in such a way that the area of vehicle-side coil 15 (area of the circular portion formed into a circular-plate shape) > the area of ground-side coil 13. In this configuration, even when vehicle-side coil 15 and ground-side coil 13 are placed opposite to each other but shifted in position, the magnetic field of ground-side coil 13 is more likely to reach vehicle-side coil 15, making it possible not only to reduce the leaking magnetic field but also to prevent deterioration of power transmission efficiency.

Note that although a configuration has been described above as an example where litz wire 22 is flattened and has an ellipsoidal cross section, litz wire 22 may be formed to have a rectangular cross section.

Furthermore, although a case has been described as an example where ground-side coil 13 and vehicle-side coil 15 are formed into a circular shape, the coils may be formed into a polygonal shape.

Although a case has been described above as an example where power feeding apparatus 1 is disposed on the ground side and power receiving apparatus 8 is disposed on a vehicle, the present invention is also applicable to a configuration in which the power receiving apparatus is disposed on the ground side and the power feeding apparatus is disposed on the vehicle side.

Note that some of the above-described various embodiments may be optionally combined as appropriate so as to exert their effects.

The disclosure of Japanese Patent Application No. 2012-088975, filled on April 10, 2012, including the specification, drawings and abstract are incorporated herein by reference in its entirety.

### Industrial Applicability

The present invention can reduce the influence of misalignment between the power feeding apparatus and the power receiving apparatus and prevent deterioration of power supply efficiency (power transmission efficiency) in contactless power transmission. Thus, the present invention is applicable to a power feeding apparatus and a power receiving apparatus of a contactless power transmission apparatus used for charging or the like of an electric propulsion vehicle such as an electric automobile or plug-in hybrid automobile.

### Reference Signs List

- 2: AC power supply
- 7: High-frequency power supply (power control apparatus)
- 10: Secondary-side rectification circuit
- 11: Load (battery)
- 13: Primary coil (ground-side coil)
- 15: Secondary coil (vehicle-side coil)

## Claims

1. A contactless power transmission apparatus comprising:
a power feeding apparatus including a primary coil that generates a magnetic field through a supply current from a power supply; and
a power receiving apparatus including a secondary coil that receives power through a magnetic field from the primary coil, wherein
the primary coil and the secondary coil are each formed by winding a coil wire, and
the number of turns of the secondary coil is set to be greater than the number of turns of the primary coil.

2. The contactless power transmission apparatus according to claim 1, wherein the coil wire of the secondary coil is set so that a width of the secondary coil in a diameter direction is smaller than a width of the secondary coil in a direction orthogonal to the diameter direction.

3. The contactless power transmission apparatus according to claim 1, wherein a diameter of the coil wire of the secondary coil is set to be smaller than a diameter of the primary coil.

4. The contactless power transmission apparatus according to claim 1, wherein the coil wire of the secondary coil is wound in a plurality of stages.
